# EUROPÄISCHE PATENTANMELDUNG

(11) **EP 0 892 125 A2**
(43) Veröffentlichungstag der Anmeldung: **20.01.1999**
(21) Anmeldenummer: 98113031.3
(22) Anmeldetag: 14.07.1998
(51) Int. Cl.: E04F 13/14, E04F 13/08, F16B 5/12

(54) **Anordnung zum Befestigen von natürlichen oder künstlichen Steinelementen**

(30) Priorität: 18.07.1997 DE 19730870
(71) Anmelder: Fa. Heinz, Stall, 49584 Fürstenau (DE)
(72) Erfinder: Stall, Heinz, 49584 Fürstenau (DE); Schöttler, Uwe, 49584 Fürstenau (DE)

(57) **Zusammenfassung**

Anordnung zum lösbaren Befestigen von natürlichen oder künstlichen Steinelementen wie beispielsweise Granitplatten auf einem beliebigen Untergrund mit einer gleichen oder voneinander verschiedenen Dehnfähigkeit, wobei zur Befestigung von Steinelementen (1) auf einem Untergrund (2) Verbindungselemente (3) vorgesehen sind, welche zwischen den Steinelementen (1) und dem Untergrund (2) verdeckt angeordnet sind und in kraftschlüssiger Weise in Schlitzen (12) oder ähnlichen Öffnungen (13) an einer dem Untergrund (2) zugewandten Seite des Steinelementes (1) arretierbar sind.

## Beschreibung

Die Erfindung betrifft eine Anordnung zum Befestigen von natürlichen oder künstlichen Steinelementen, wie beispielsweise Granitplatten auf einem Untergrund nach dem Oberbegriff des Anspruches 1. An eine derartige Anordnung werden vielfältige Anforderungen gestellt, wie beispielsweise der Ausgleich unterschiedlicher Dehnfähigkeit der verarbeiteten Materialien oder ein minimaler Montageaufwand.

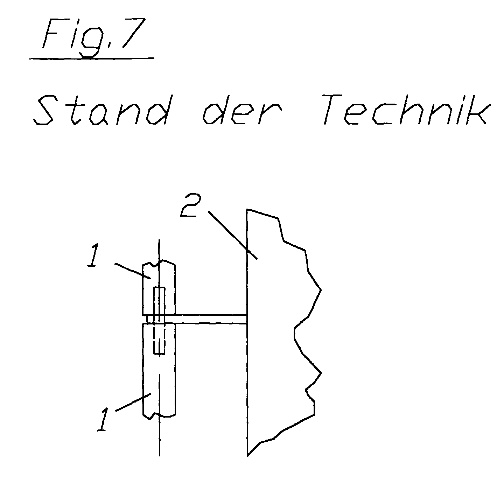

In einem Prospekt "Lutz Ankersysteme" mit dem Druckvermerk "Lutz Wertheim SH 1500" werden Verankerungen für Naturstein offenbart, die jeweils mittels Stifte in dafür vorgesehene Bohrungen in der unteren und der oberen Stirnseite einer Fassadenplatte eingreifen und beispielsweise durch das Einsetzen mit Mörtel in einer Wand oder dgl. Untergrund angebracht werden können (siehe auch Fig.7). Eine Befestigung von Steinelementen mit solchen Verankerungen weist gleich mehrere Nachteile auf Neben einer unzureichenden Anpassungsfähigkeit an unterschiedliches Dehnungsverhalten zwischen den Steinelementen und dem Untergrund stellen die auch von außen sichtbaren Verankerungen eine Beeinträchtigung beispielsweise bei der dekorativen Gestaltung einer Fassade dar. Weiterhin ist bei einer, aus einer Vielzahl von Steinelementen gebildeten Fassade ein Austauschen oder eine Demontage zu Reparaturzwecken einzelner Steinelemente nicht oder nur mit einem massiven Arbeitsaufwand möglich.

In der DE 90 13 220 U1 wird eine Vorrichtung zur Befestigung dekorativer Platten an Wänden oder auf Metallrahmen offenbart, bei der die Platten an der Rückseite mit paarweise angebrachten Einschnitten versehen sind, welche schräg bezüglich der Oberfläche der Platten verlaufen und aufeinander zu konvergieren und wobei in diesen Einschnitten ebenfalls schräg angestellte Schenkel von Metallhaltern eingeschoben werden können. Diese Art der Befestigung ist mit dem Mangel behaftet, daß die Platten von der Seite her auf die schräg angestellten Schenkel der Metallhalter aufgeschoben werden müssen. Es ist also nicht möglich, einzelne Platten aus einer Fassade, beispielsweise zu Reparaturzwecke herauszunehmen bzw. eine einzelne Platte in eine Lücke einer Fassade einzusetzen.

In einer weiteren DE 92 05 340 U1 ist eine Gebäudewand mit einer Vorsatzfassade aus Steinplatten offenbart ist, wobei die Platten an ihrer gebäudewärtigen Rückseite mit wenigsten zwei in Einbaulage parallel zur Horizontalen verlaufenden Längsnuten versehen sind, deren Querschnitte von der Rückseite geneigt aufwärts gerichtet sind und Formrippen eines mit einem Basisstreifen an der Rückseite angeordneten Einschubprofiles aufnehmen. Auch diese Lösung ist mit dem bereits vorstehend aufgeführten Mangel der umständlichen und arbeitsaufwendigen Verlegung bzw. Montage behaftet.

Aufgabe der Erfindung ist es daher, eine Anordnung zur Befestigung von natürlichen oder künstlichen Steinelementen auf einem Untergrund jeglicher Art zu schaffen, bei der die zur Befestigung erforderlichen Mittel nicht sichtbar sind und somit die dekorative Ausgestaltungen einer Fassade nicht nachteilig beeinflußt wird. Weiterhin soll es möglich sein, jedes Steinelement einzeln und mit einem minimalen Arbeitsaufwand auf einen beliebigen Untergrund anzubringen.

Diese Aufgabe wird erfindungsgemäß durch die im kennzeichnenden Teil des Anspruches 1 aufgeführten Merkmale gelöst. Hinsichtlich der weiteren Ausgestaltung der Erfindung wird auf die Ansprüche 2 bis 12 verwiesen.

Eine erfindungsgemäße, nach den Merkmalen des kennzeichnenden Teiles des Anspruches 1 ausgeführte Anordnung zur Befestigung von Steinelementen auf einem beliebigen Untergrund ermöglicht es, Steinelemente wie beispielsweise Granit- oder Sandsteinplatten durch eine Aufsteckbewegung einzelner Steinelemente auf einem beliebigen Untergrund zu arretieren, wobei ein unterschiedliches Dehnungsverhalten zwischen den Steinelementen und dem Untergrund selbsttätig ausgeglichen wird. Dabei ist es unbedeutend, ob die Steinelemente als Einzelelemente oder in einem Verbund mit anderen Steinelementen angeordnet sind. Jedes einzelne Steinelement ist einzeln lös- und arretierbar auf dem Untergrund befestigt. Ein weiteres vorteilhaftes Merkmal besteht darin, daß durch die nicht sichtbare Befestigung der Steinelemente eine dekorative Ausgestaltung, beispielsweise von Gebäudefassaden oder eine Außenfläche einer Eingangstür nicht nachteilig beeinflußt wird.

Eine vorteilhafte Ausgestaltung der Erfindung sieht vor, zur Befestigung der Steinelemente Verbindungselemente zu verwenden, welche einen zumindest in etwa hutförmigen Querschnitt aufweisen und deren federnd nachgiebig ausgebildete Schenkel in an der dem Untergrund zugewandten Seite der Steinelemente angebrachten Schlitzen arretierbar sind. Die Verbindungselemente können dazu als Klammern ausgebildet sein, die aus korosionbeständigen Federstahl hergestellt sind und beispielsweise mittels Schrauben und Dübel auf einem steinartigen Untergrund befestigt werden können. Zur Erleichterung des Arretiervorganges der Steinelemente aufeinem beliebigen Untergrund sind an den freistehenden Enden der Schenkel Rundungen vorgesehen, so daß beim Arretieren der Klammern auf dem zwischen zwei benachbarten Schlitzen vorhandenen Steg sich die federnden Schenkel entgegen der Federvorspannung auseinander bewegen und in Zusammenwirkung mit dem Steg eine Haltekraft aufbringen. Um einer sichere Befestigung der Steinelemente auf dem Untergrund zu erreichen, sind an der dem Untergrund zugewandten Seite der Steinelemente je nach dem Gewicht und der Art der Anbringung (horizontal oder vertikal) der Steinelemente verteilt nach statischen Gesichtspunkte Schlitze angebracht, in denen die federnd nachgiebig ausgeführten Schenkein der Klammern eingreifen und dadurch eine sichere, jederzeit wieder lösbare Befestigung bewirken. Die Anbringung der Schlitze kann vorzugsweise direkt bei der Herstellung der Steinelemente erfolgen, beispielsweise durch einen Sägenschnitt mit einem Kreissägeblatt, der in etwa mit einer Schnittiefe von einer halben Materialstärke an der dem Untergrund zugewandten Seite der Steinelemente angebracht sein kann. Eine vorteilhafte Ausbildung der Schlitze sieht vor, daß diese eine rechteckförmigen Querschnitt aufweisen und parallel oder auch schräg zu einer Längsmittelebene der Klammern ausgerichtet sein können.

In einer Weiterbildung der Erfindung sind jedoch auch andere Formen von Verbindungselementen vorstellbar. So ist es beispielsweise möglich, als Verbindungselement eine Klammer vorzusehen, bei der der Abstand zwischen der federnden Schenkeln zur freistehenden Enden hin größer wird und die Rundungen zur Erleichterung des Arretiervorganges nach innen gerichtet sind. Weiterhin ist auch denkbar, die Verbindungselemente als ebenfalls hutförmige Klammern auszuführen, wobei die federnden Schenkel eine nach innen oder außen gerichtete konvexe Form aufweisen. Hierzu müssen dann die Schlitze in der dem Untergrund zugewandten Seite der Steinelemente mit einem Formfräser hergestellt werden.

Eine detaillierte Beschreibung des Gegenstandes der Erfindung erfolgt nun anhand von in einer Zeichnung dargestellten Ausführungsbeispielen. In der Zeichnung stellt im einzelnen dar:
- Fig.1:: eine vergrößerte, teilweise abgebrochene Darstellung einer erfindungsgemäßen Anordnung zur Befestigung eines Steinelementes auf einem beliebigen Untergrund;
- Fig.2:: eine Darstellung des Querschnittes eines Verbindungselementes nach der Erfindung;
- Fig.3:: eine Draufsicht des Verbindungselementes gemäß Fig.2;
- Fig.4-6:: weitere Ausführungsbeispiele von Verbindungselementen;
- Fig.7:: eine Darstellung des Standes der Technik.

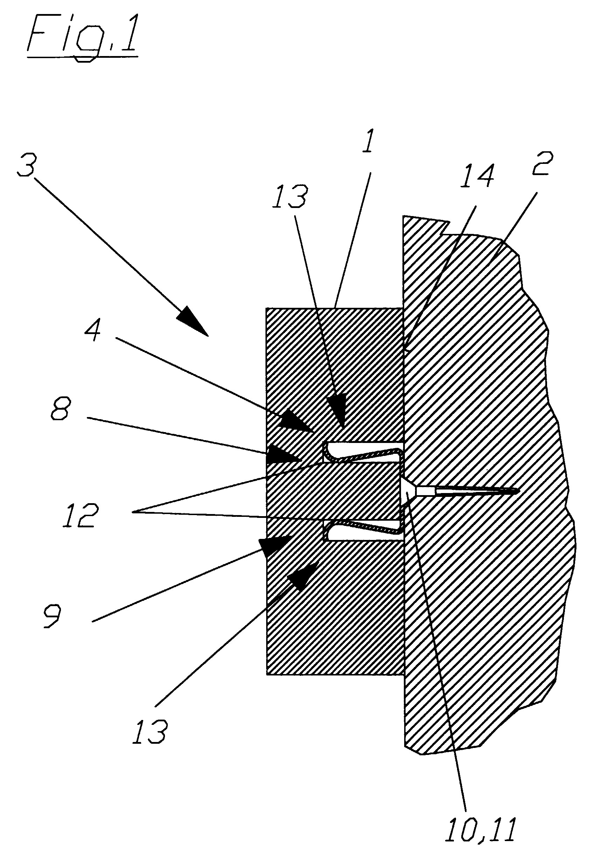

Eine erfindungsgemäße Anordnung zur Befestigung von Steinelementen 1, wie beispielsweise Granitplatten auf einem beliebigen Untergrund 2 ist in Fig. 1 dargestellt. Hierbei handelt es sich um eine Anordnung, bei der ein Steinelement 1 in einer vertikalen Ausrichtung auf dem Untergrund 2 befestigt ist. Das Wesen der Erfindung ist jedoch ebenso auf Anordnungen zur Befestigung von Steinelementen auf einem Untergrund in einer horizontalen Ausrichtung anwendbar.

Wie weiterhin aus Fig. 1 ersichtlich ist, erfolgt die Befestigung des Steinelementes 1 über Verbindungselemente 3, welche als Klammern 4,5,6,7 ausgebildet sind und federnd nachgiebig ausgebildete Schenkel 8,9 umfassen. Zur Befestigung der Klammern 4,5,6,7 auf dem Untergrund 2 sind zumindest zwei Befestigungsschrauben 10,11 vorgesehen. Um eine sichere Befestigung der Steinelemente 1 auf dem Untergrund zu erreichen, greifen die federnd nachgiebig ausgebildeten Schenkel 8,9 in als Schlitze 12 ausgeführte Öffnungen 13, welche an der dem Untergrund 2 zugewandten Seite 14 des Steinelementes 1 angebracht sind. Bei der in Fig. 1 dargestellten Form der Schlitze 12 handelt es sich um eine einfach herstellbare rechteckförmige Querschnittsform, die beispielsweise durch einen Sägenschnitt mit einem Kreissägenblatt herstellbar ist. Die Länge der Schlitze 12 bzw. der jeweiligen Klammern 4,5,6,7 hängt ab von statischen Gesichtspunkte, wie beispielsweise vom Gewicht der Steinelemente 1 und von der Anordnung und Anzahl der eingesetzten Klammern 4,5,6,7. Im Gegensatz zu der in Fig. 1 dargestellten Querschnittsform der Schlitze 12 sind aber auch andere Formen vorstellbar.

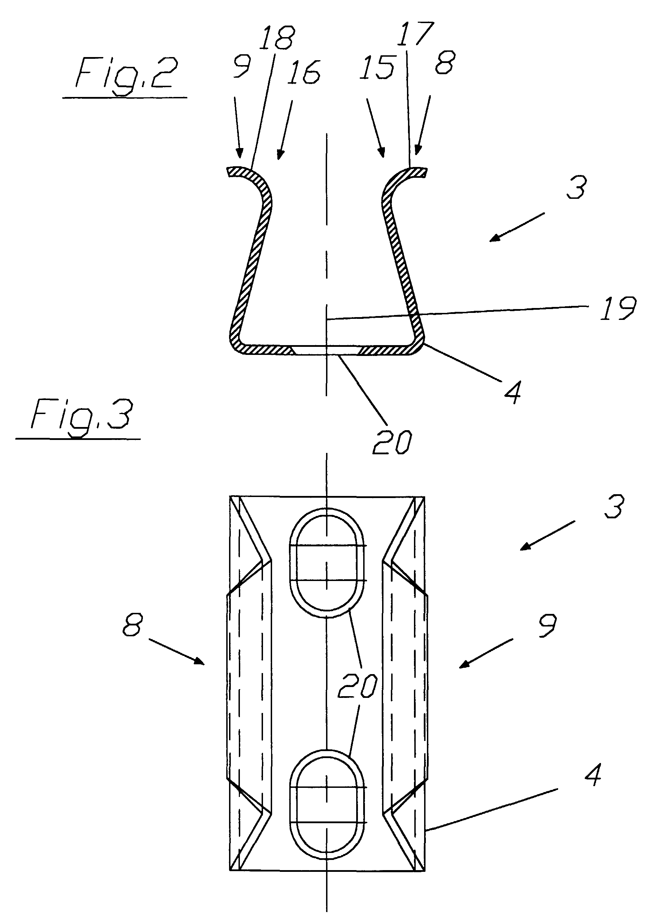

In den Fig. 2 und 3 ist eine Klammer 4 in einer vergrößerten Darstellung näher veranschaulicht. Wie hieraus zu erkennen ist, ist das als Klammer 4 ausgebildete Verbindungselement 3 so geformt, daß der Abstand zwischen den federnd nachgiebigen Schenkeln 8,9 zu den freistehenden Enden 15,16 hin kleiner wird. Zur Erleichterung des Arretiervorganges sind an den freistehenden Enden 15,16 der Schenkel 8,9 Rundungen 17,18 angebracht, die in eine von einer Längsmittelebene 19 nach außen zeigende Richtung weisen. Wie insbesondere aus Fig.3 zu entnehmen ist, sind die Klammern mit Bohrungen versehen, die in diesem Ausführungsbeispiel als Langlöcher 20 ausgeführt sind. Dadurch ist einfache Verstellbarkeit der Klammern 4 gegenüber dem Untergrund erreichbar. Wie weiterhin aus Fig.3 ersichtlich ist, können die Ecken der freistehenden Enden 15,16 der Schenkel 8,9 abgeschrägt sein. Daraus ergibt sich eine bessere Zugänglichkeit der Befestigungsschrauben.

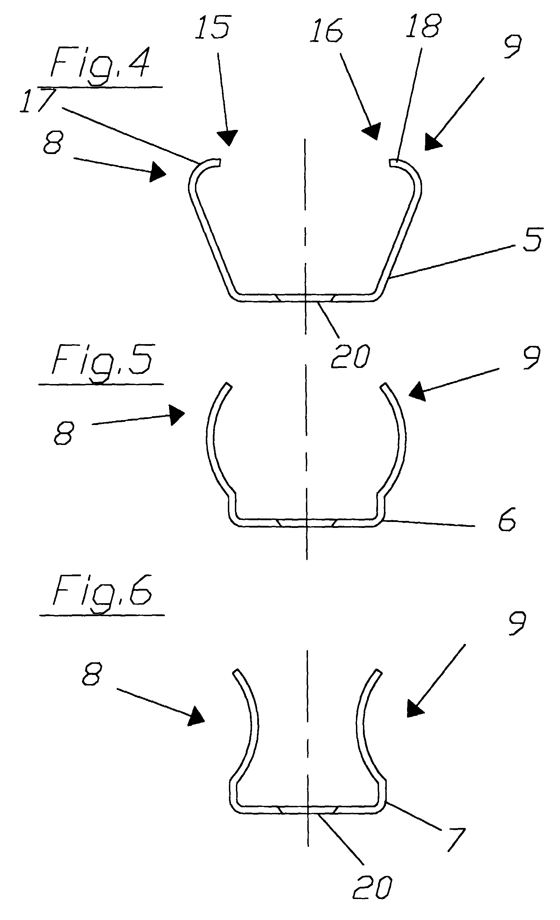

In den Figuren 4 bis 6 sind weitere vorteilhafte Ausführungsformen von Klammern 5,6,7 dargestellt. So ist es beispielsweise möglich, als Verbindungselement eine Klammer 5 (Fig.4) vorzusehen, bei der der Abstand zwischen der federnden Schenkeln 8,9 zur freistehenden Enden 15,16 hin größer wird und die Rundungen 17,18 zur Erleichterung des Arretiervorganges nach innen gerichtet sind. Weiterhin ist auch denkbar, die Verbindungselemente als ebenfalls hutförmige Klammern 6,7 auszuführen, wobei die federnden Schenkel 8,9 eine nach innen oder außen gerichtete konvexe Form aufweisen. Hierzu müssen dann die Schlitze in der dem Untergrund zugewandten Seite der Steinelemente mit einem Formfräser hergestellt werden.

## Patentansprüche

1. Anordnung zum lösbaren Befestigen von natürlichen oder künstlichen Steinelementen, wie beispielsweise Granitplatten auf einem beliebigen Untergrund mit einer gleicher oder voneinander verschiedenen Dehnfähigkeit mit zwischen dem Untergrund und den Steinelementen (1) verdeckt angeordneten Verbindungselementen (3), wobei diese in kraftschlüssiger Weise steckbar in Schlitzen (12) oder ähnlichen Öffnungen (13) an einer dem Untergrund (2) zugewandten Seite des Steinelementes (1) arretierbar sind.

2. Anordnung zum lösbaren Befestigen von natürlichen oder künstlichen Steinelementen nach Anspruch 1, **dadurch gekennzeichnet**, daß die Verbindungselemente (3) als Klammern (4,5,6,7) mit einem zumindest in etwa hutförmig ausgeführten Querschnitt ausgebildet sind.

3. Anordnung zum lösbaren Befestigen von natürlichen oder künstlichen Steinelementen nach Anspruch 1 und 2, **dadurch gekennzeichnet**, daß die Klammern (4,5,6,7) federnd nachgiebige Schenkel (8,9) aufweisen.

4. Anordnung zum lösbaren Befestigen von natürlichen oder künstlichen Steinelementen nach einem der Ansprüche 1 bis 3, **dadurch gekennzeichnet**, daß sich der Abstand zwischen den federnd nachgiebigen Schenkeln (8,9) der Klammern (4) zu den freistehenden Enden (15,16) hin verringert.

5. Anordnung zum lösbaren Befestigen von natürlichen oder künstlichen Steinelementen nach einem der Ansprüche 1 bis 4, **dadurch gekennzeichnet**, daß sich der Abstand zwischen den federnd nachgiebigen Schenkeln (8,9) der Klammern (5) zu den freien Enden (15,16) hin vergrößert.

6. Anordnung zum lösbaren Befestigen von natürlichen oder künstlichen Steinelementen nach einem der Ansprüche 1 bis 5, **dadurch gekennzeichnet**, daß die federnden Schenkel (8,9) der Klammern (4,5) an ihren freistehenden Enden (15,16) Rundungen (17,18) aufweisen.

7. Anordnung zum lösbaren Befestigen von natürlichen oder künstlichen Steinelementen nach einem der Ansprüche 1 bis 6, **dadurch gekennzeichnet**, daß die Rundungen (17,18) der Schenkel (8,9) der Klammern (4) nach außen gerichtet sind.

8. Anordnung zum lösbaren Befestigen von natürlichen oder künstlichen Steinelementen nach einem der Ansprüche 1 bis 7, **dadurch gekennzeichnet**, daß die Rundungen (17,18) der Schenkel (8,9) der Klammern (5) nach innen gerichtet sind.

9. Anordnung zum lösbaren Befestigen von natürlichen oder künstlichen Steinelementen nach einem der Ansprüche 1 bis 8, **dadurch gekennzeichnet**, daß die federnd nachgiebigen Schenkel (8,9) der Klammern (6) eine nach außen gerichtete, konvexe Form haben.

10. Anordnung zum lösbaren Befestigen von natürlichen oder künstlichen Steinelementen nach einem der Ansprüche 1 bis 9, **dadurch gekennzeichnet**, daß die federnd nachgiebigen Schenkel (8,9) der Klammern (7) eine nach innen gerichtete, konvexe Form aufweisen.

11. Anordnung zum lösbaren Befestigen von natürlichen oder künstlichen Steinelementen nach einem der Ansprüche 1 bis 10, **dadurch gekennzeichnet**, daß die Verbindungselemente (3) aus einem korrosionsbeständigen Material bestehen.

12. Anordnung zum lösbaren Befestigen von natürlichen oder künstlichen Steinelementen nach einem der Ansprüche 1 bis 11, **dadurch gekennzeichnet**, daß die Schlitze (12) an der dem Untergrund (2) zugewandten Seite der Steinelemente (1) einen rechteckförmigen Querschnitt aufweisen und parallel zu einer Längsmittelebene (19) ausgerichtet sind.
